# EUROPÄISCHE PATENTSCHRIFT

(11) **EP 2 014 622 B1**
(45) Veröffentlichungstag und Bekanntmachung des Hinweises auf die Patenterteilung: **18.01.2017**
(21) Anmeldenummer: 07111945.7
(22) Anmeldetag: 06.07.2007
(51) Int. Cl.: C03C 3/06, C03C 12/00, C09C 1/30, C03B 19/06, C03B 20/00

(54) **Verfahren zur Herstellung eines Kieselglasgranulats**
Method for Producing a Quartz Glass granulate
Procédé pour produire un Granulé en verre de quartz

(43) Veröffentlichungstag der Anmeldung: 14.01.2009
(73) Patentinhaber: Evonik Degussa GmbH, 45128 Essen (DE)
(72) Erfinder: Schumacher, Kai, 65719 Hofheim (DE); Schulze-Isfort, Christian, 63694 Limeshain (DE); Brandl, Paul, Yokkaichi 512-0933 (JP); Ochiai, Mitsuru, Saitama Prefecture 349-0113 (JP)

(56) Entgegenhaltungen:
- EP-A- 1 074 513
- EP-A- 1 717 202
- EP-A1- 1 813 574
- EP-B1- 0 335 875
- WO-A-2006/089754
- DE-A1- 3 741 846
- DE-B1- 1 807 714
- JP-A- 2001 089 168
- US-A- 4 325 686

## Beschreibung

Die Erfindung betrifft ein Verfahren zur Herstellung eines Kieselglasgranulates.

Es sind zahlreiche Methoden zur Herstellung von Kieselglasgranulaten ausgehend von amorphem Siliciumdioxid bekannt. Geeignete Ausgangsmaterialien können durch Sol-Gel-Verfahren hergestelltes Siliciumdioxid, Fällungskieselsäure oder ein pyrogen hergestelltes Siliciumdioxid sein. Die Herstellung umfasst gewöhnlich eine Agglomeration des Siliciumdioxides. Dies kann mittels Nassgranulierung erfolgen. Bei der Nassgranulierung wird aus einer kolloidalen Siliciumdioxid-Dispersion durch ständiges Mischen oder Rühren ein Sol und daraus unter allmählichem Entzug der Feuchte eine krümelige Masse erzeugt. Die Herstellung mittels Nassgranulierung ist aufwändig und teuer, insbesondere wenn hohe Ansprüche an eine niedrige Verunreinigung des Granulates gestellt werden.

Es ist weiterhin möglich, Kieselglas durch Kompaktierung von Siliciumdioxid zu erhalten. Die Kompaktierung, ohne Bindemittel, von pyrogen hergestelltem Siliciumdioxid ist schwierig, weil pyrogen hergestelltes Siliciumdioxid sehr trocken ist, und keine Kapillarkräfte die Partikelbindung herbeiführen können. Pyrogen hergestellte Siliciumdioxide zeichnen sich durch eine extreme Feinteiligkeit, ein niedriges Schüttgewicht, hohe spezifische Oberfläche, sehr hohe Reinheit, weitestgehend sphärische Primärpartikelform und das Fehlen von Poren aus. Das pyrogen hergestellte Siliciumdioxid weist häufig eine hohe Oberflächenladung, die die Agglomeration elektrostatisch erschwert, auf.

Die Kompaktierung von pyrogen hergestelltem Siliciumdioxid stellt daher bislang keinen brauchbaren Weg zur Herstellung von qualitativ hochwertigem Kieselglas dar.

In US4042361 wird ein Verfahren zur Herstellung von Kieselglas offenbart, bei dem pyrogen hergestelltes Siliciumdioxid eingesetzt wird. Dieses wird in Wasser unter Bildung einer gießbaren Dispersion einarbeitet, nachfolgend das Wasser thermisch entfernt, den stückigen Rückstand bei 1150 bis 1500°C calciniert und anschließend in 1 -100 µm- große Granulate vermahlen und verglast. Die Reinheit des so hergestellten Kieselglases ist für heutige Anwendungen nicht ausreichend. Das Herstellverfahren ist aufwändig und teuer.

Auch in WO91/13040 wird ein Verfahren offenbart, bei dem pyrogen hergestelltes Siliciumdioxid zur Herstellung von Kieselglas eingesetzt wird. Das Verfahren umfasst das Bereitstellen einer wässrigen Dispersion von pyrogenem Siliciumdioxid mit einem Feststoffgehalt von etwa 5 bis etwa 55 Gew.-%; das Überführen der wässrigen Dispersion in poröse Teilchen, indem man die wässrige Lösung in einem Ofen bei einer Temperatur zwischen etwa 100 bis etwa 200°C trocknet und das getrocknete poröse Teilchen zerkleinert; und nachfolgendes Sintern der porösen Teilchen in einer Atmosphäre mit einem Wasser-Partialdruck im Bereich von 0,2 bis 0,8 Atmosphären bei Temperaturen unterhalb etwa 1200 °C. Es werden hochreine Kieselglasgranulate mit einem Durchmesser von etwa 3 bis 1000 µm, einer Stickstoff-BET-Oberfläche von weniger als etwa 1 m²/g und einem gesamten Verunreinigungsgehalt von weniger als etwa 50 ppm und einem Gehalt an Metallverunreinigung von weniger als 15 ppm erhalten. WO91/13040 gibt keine Hinweise, wie ein Kieselglasgranulat mit definierten, engen Abmessungen erhalten werden kann.

EP-A-1717202 offenbart ein Verfahren zur Herstellung zur Kieselglasgranulat durch Sintern eines pyrogen hergestellten Siliciumdioxides, welches nach einem bestimmten Verfahren auf Stampfdichten von 150 bis 800 g/l kompaktiert wurde. Bei diesem Verfahren, in DE-A-19601415 offenbart, handelt es sich um eine Sprühtrocknung von in Wasser dispergiertem Siliciumdioxid und nachfolgender Temperung bei 150 bis 1100°C. Das so erhaltene Granulat kann gesintert werden, liefert jedoch keine völlig blasenfreien Kieselglasgranulate.

EP-A-1258456 offenbart ein Verfahren zur Herstellung eines monolithischen Glasformkörpers, bei dem man ein Siliciumalkoxid hydrolysiert und nachfolgend unter Bildung eines Sols ein pyrogen hergestelltes Siliciumdioxidpulver hinzugibt, das Sol nachfolgend in ein Gel überführt, das Gel trocknet und nachfolgend sintert.

EP-A-1283195 offenbart ebenfalls Sol-Gel-Verfahren bei denen Siliciumalkoxide und pyrogen hergestelltes Siliciumdioxidpulver eingesetzt werden.

In EP-A-335875 wird ein Verfahren zur Herstellung eines Gegenstandes aus Quarzglas beschrieben, bei dem man die BET-Oberfläche einer pyrogenen Kieselsäure um mindestens das Zehnfache erniedrigt, so dass sie nicht mehr als 5 m²/g beträgt, indem man die Kieselsäure mit Wasser mischt, das benetzte Pulver trocknet und nachfolgend tempert.

Prinzipiell folgen die im Stand der Technik bekannten Verfahren alle dem Schema, dass zunächst ein Siliciumalkoxid hydrolysiert wird, ein Siliciumdioxidpulver unter Bildung eines Soles entsteht, welches in ein Gel überführt wird, das Gel anschließend getrocknet und nachfolgend gesintert. Der Prozess umfasst etliche Stufen, ist langwierig, empfindlich gegen Prozessschwankungen und anfällig für Verunreinigungen.

Aufgabe der vorliegenden Erfindung war es, ein Verfahren zur Herstellung eines Kieselglasgranulates bereitzustellen, bei dem keine Bindemittel benötigt werden. Das Verfahren soll die Herstellung großer Mengen erlauben und Produkte mit hoher Reinheit und geringen Defekten liefern. Gegenstand der Erfindung ist ein Verfahren zur Herstellung eines Kieselglasgranulates, welches weitestgehend frei von eingeschlossenen Blasen ist, und die folgenden Merkmale aufweist:
- Fläche:: 100 bis 5000 µm²,
- ECD (Equivalent Circle Diameter):: 5 bis 100 µm,
- Umfang:: 20 bis 400 µm,
- Maximaler Durchmesser:: 10 bis 140 µm,
- Minimaler Durchmesser:: 5 bis 80 µm,
wobei alle Werte Medianwerte darstellen und sich auf ein Granulatkorn beziehen,
- spezifische Oberfläche BET:: < 1 µm²/g
- Verunreinigungen:: < 50 ppm
bei dem man
a) pyrogen hergestelltes Siliciumdioxidpulver mit einer Stampfdichte von 15 bis 190 g/l zu Schülpen kompaktiert, wobei die Kompaktierung eine mechanische Verdichtung ohne Zusatz von Bindemittel ist
b) diese nachfolgend bricht und Schülpenbruchstücke mit einem Durchmesser von < 100 µm und > 800 µm abtrennt
c) wobei die Schülpenbruchstücke eine Stampfdichte von 300 bis 600 g/l aufweisen,
d) diese anschließend bei 600 bis 1100°C in einer Atmosphäre, die eine oder mehrere Verbindungen enthält, die geeignet sind Hydroxylgruppen zu entfernen, behandelt und
e) anschließend bei 1200°C bis 1400°C sintert.

Als Schülpen bezeichnet man die mehr oder weniger bandförmigen Zwischenprodukte, die bei der Walzenkompaktierung durch die Verpressung des Ausgangsmaterials entstehen. Sie werden in einem zweiten Schritt gebrochen. Die Eigenschaften der Schülpen und Schülpenbruchstücke können durch die prozessualen Größen, wie der gewährte Prozesssteuerungsmodus, die Kompaktierkraft, die Breite des Spalts zwischen den beiden Walzen und die Druckhaltezeit, die durch die entsprechende Veränderung der Umdrehungsgeschwindigkeiten der Presswalzen eingestellt wird, beeinflusst werden.

Das eingesetzte pyrogen hergestellte Siliciumdioxidpulver kann eines mit einer Primärteilchengröße von 5 bis 50 nm und einer BET-Oberfläche von 30 bis 400 m²/g sein. Vorzugsweise können pyrogen hergestellte Siliciumdioxid mit einer BET-Oberfläche von 40 bis 150 m²/g eingesetzt werden. Die Reinheit des eingesetzten pyrogen hergestellten Siliciumdioxidpulvers ist mindestens 99 Gew.-% und vorzugsweise mindestens 99,9 Gew.-%.

Das pyrogen hergestellte Siliciumdioxidpulver kann eine Stampfdichte (nach DIN EN ISO 787-11) von 15 bis 190 g/l, vorzugsweise von 30 bis 150 g/l, aufweisen. Es kann mittels bekannter Verfahren und Vorrichtungen vorverdichtet sein. So können beispielsweise die Vorrichtungen gemäß US4325686, US4877595, US3838785, US3742566, US3762851, US3860682 verwendet werden. In einer bevorzugten Ausführungsform der Erfindung kann man ein pyrogen hergestelltes Siliciumdioxidpulver einsetzen, das mittels eines Pressbandfilters gemäß EP-A-0280851 oder US 4,877,595 verdichtet wurde.

Das pyrogen hergestellte Siliciumdioxidpulver mit einer Stampfdichte von 15 bis 190 g/l wird nachfolgend zu Schülpen kompaktiert. Unter Kompaktieren wird dabei die mechanische Verdichtung ohne Zusatz von Bindemittel verstanden. Bei der Kompaktierung sollte eine gleichmäßige Pressung des pyrogen hergestellten Siliciumdioxidpulvers gewährleistet sein, um Schülpen mit einer weitestgehend homogenen Dichte zu erhalten.

Die Kompaktierung zu Schülpen kann mittels zweier Walzen erfolgen, von denen eine oder auch beide gleichzeitig eine Entlüftungsfunktion haben können.

Vorzugsweise können zwei Kompaktierwalzen eingesetzt werden, die glatt oder profiliert sein können. Das Profil kann sowohl nur auf einer Kompaktierwalze als auch auf beiden Kompaktierwalzen vorhanden sein. Das Profil kann aus achsenparallelen Riffeln oder aus beliebig angeordneten Mulden (Vertiefungen) in beliebiger Ausgestaltung bestehen. In einer weiteren Ausführungsform der Erfindung kann mindestens eine der Walzen eine Vakuumwalze sein.

Zum Kompaktieren eignet sich insbesondere ein Verfahren bei dem man das zu kompaktierende, pyrogen hergestellte Silciumdioxidpulver mittels zweier Verdichtungswalzen, wovon mindestens eine drehantreibbar angeordnet ist und spezifische Anpressdrücke von 0,5 kN/cm bis 50 kN/cm bewirken, kompaktiert, wobei die Oberfläche der Verdichtungswalzen aus einem Material besteht, welches überwiegend oder vollständig frei von Metallen und/oder Metallverbindungen ist oder die Oberfläche aus einem sehr harten Werkstoff besteht. Geeignete Materialien sind technische Keramiken wie zum Beispiel Siliciumcarbid, Siliciumnitrid, beschichtete Metalle oder Aluminiumoxid. Das Verfahren ist geeignet, die Kontamination der Schülpenbruchstücke und des Kieselglasgranulates zu minimieren.

Nach der Kompaktierung werden die Schülpen gebrochen. Hierzu kann ein Siebgranulator, der mit seiner Maschenweite des Siebes die Korngröße vorgibt, verwendet werden. Die Maschenweite kann 250 µm bis 20 mm betragen

Für das Brechen der Schülpen kann eine Vorrichtung mit zwei, sich gegensinnig drehenden Walzen mit einem definierten Spalt oder eine Stachelwalze eingesetzt werden.

Die Schülpenbruchstücke können mittels eines Sichters, eines Siebes oder eines Klassierers klassiert werden. Dabei kann der Feinanteil (Teilchen kleiner 100 µm) abgetrennt werden. Als Sichter können Querstromsichter, Gegenstromumlenksichter etc. eingesetzt werden. Als Klassierer kann ein Zyklon eingesetzt werden. Der bei der Klassierung abgetrennte Feinanteil (Teilchen kleiner 100 µm) kann in das erfindungsgemäße Verfahren zurückgeführt werden.

Die Schülpenbruchstücke weisen eine Stampfdichte von 300 bis 600 g/l auf. Bevorzugt weisen die Schülpenbruchstücke eine Stampfdichte von 350 bis 550 g/l und besonders bevorzugt 400 bis 600 g/l auf. Die Schülpenbruchstücke weisen in der Regel eine um 10 bis 40% höhere Stampfdichte als die ungebrochenen Schülpen auf.

Die klassierten Schülpenbruchstücke werden anschließend bei Temperaturen von 400 bis 1100°C einer Atmosphäre ausgesetzt, die eine oder mehrere reaktive Verbindungen enthält, die geeignet sind Hydroxylgruppen und Verunreinigungen aus den Schülpenbruchstücken zu entfernen. Dies können bevorzugt Chlor, Salzsäure, Schwefelhalogenide und/oder Schwefeloxidhalogenide sein. Besonders bevorzugt kann Chlor, Salzsäure, Dischwefeldichlorid oder Thionylchlorid eingesetzt werden.

Gewöhnlich werden die reaktiven Verbindungen in Kombination mit Luft, Sauerstoff, Helium, Stickstoff, Argon und/oder Kohlendioxid eingesetzt. Dabei kann der Anteil der reaktiven Verbindungen 0,5 bis 20 Vol.-% betragen.

Anschließend wird bei 1200°C bis 1400°C gesintert.

Dabei wird die BET-Oberfläche des Kieselglasgranulates nach DIN 66131 bestimmt. Die Granulatdimensionen werden durch Bildanalyse mittels eines TEM Gerätes der Fa. Hitachi H 7500 und einer CCD-Kamera MegaView II, der Fa. SIS bestimmt. Die Bildvergrößerung zur Auswertung beträgt 30000:1 bei einer Pixeldichte von 3,2 nm. Die Anzahl der ausgewerteten Teilchen ist größer als 100. Die Präparation erfolgt gemäß ASTM3849-89. Die untere Schwellwertgrenze in Bezug auf Detektion liegt bei 50 Pixeln.

Die Kieselglasgranulate können eine Fläche von 500 bis 1500 µm², einen ECD von 10 bis 50 µm, einen Umfang von 50 bis 150 µm, einen maximalen Durchmesser von 30 bis 70 µm und einen minimalen Durchmesser 20 bis 50 µm aufweisen.

Das Kieselglasgranulat kann eine bimodale Verteilung der Granulatkörner aufweisen. Die bimodale Verteilung kann beispielsweise durch Siebanalyse bestimmt werden.

Die bimodale Verteilung kann ein erstes Maximum bei 100 bis 200 µm und ein zweites Maximum bei 250 bis 400 µm aufweisen.

Es hat sich gezeigt, dass ein Kieselglasgranulat, welches eine bimodale Verteilung aufweist, auch besonders günstige Glaseigenschaften, wie minimale Blasenbildung, aufweist.

Weiterhin kann die Oberfläche eines Granulatkornes Erhebungen aufweisen, die unregelmäßige Abstände voneinander haben.

Die Erhebungen können eine Höhe von 0,5 µm bis 35 µm erreichen. In der Regel betragen die Höhen 0,3 bis 20 µm.

Die Summe der Verunreinigungen im Kieselglasgranulat ist < 50 ppm. Bevorzugt kann die Summe der Verunreinigungen weniger als 10 ppm und besonders bevorzugt weniger als 5 ppm betragen. Dabei kann der Anteil an metallischen Verunreinigungen bevorzugt < 5 ppm und besonders bevorzugt < 1 ppm sein.

Bevorzugt kann weiterhin ein Kieselglasgranulat sein, das folgende Anteile an Verunreinigungen, alle in ppb, aufweist: Al ≤ 600, Ca ≤ 300, Cr ≤ 250, Cu ≤ 10, Fe ≤ 800, K ≤ 80, Li ≤ 10, Mg ≤ 20, Mn ≤ 20, Na ≤ 80, Ni ≤ 800, Ti ≤ 200, V ≤ 5 und Zr ≤ 80. Besonders bevorzugt kann ein Granulat sein, das folgende Anteile an Verunreinigungen, alle in ppb, aufweist: Al ≤ 350, Ca ≤ 90, Cr ≤ 40, Cu ≤ 3, Fe ≤ 100, K ≤ 50, Li ≤ 1, Mg ≤ 10, Mn ≤ 5, Na ≤ 50, Ni ≤ 80, Ti ≤ 100, V ≤ 1, Zr ≤ 3.

Zur Bestimmung des Metallgehaltes wird das Kieselglasgranulat in einer flusssäurehaltigen Lösung gelöst. Das sich bildende Siliciumtetrafluorid verdampft und der verbleibende Rückstand wird mittels Induktiv gekoppelter Plasma - Massenspektrometrie (ICP-MS) untersucht. Die Genauigkeit beträgt ca. 10 %.

Beispiele 1-3: Die Beispiele werden entsprechend der folgenden Arbeitsvorschrift durchgeführt. Einsatzstoffe, Reaktionsbedingungen und apparative Einstellungen sind in der Tabelle 1 wiedergegeben.

Das Siliciumdioxidpulver wird in dem Kompaktor kompaktiert. Die erhaltenen stabförmigen Schülpen werden mittels einer Zerkleinerungsmaschine (Frewitt MG-633) ausgestattet mit einem Siebgewebe (Größe 800 µm) gebrochen. Nach der Feingutabtrennung erhält man stabile Schülpenbruchstücke. Anschließend werden die Schülpenbruchstücke in einem Reaktor im HCl-Gasstrom gereinigt und anschließend gesintert.

Man erhält jeweils ein hochreines, nahezu blasenfreies Kieselglasgranulat mit den in Tabelle 1 aufgelisteten Dimensionen und Verunreinigungen.

Das erfindungsgemäße Kieselglasgranulat der Beispiele 1 und 2 zeigt eine bimodale Verteilung der Granulatkörner. Für das Granulat aus Beispiel 1 ergeben sich die in Tabelle 2 mittels Siebfraktionierung (Maschenweite 0,8 mm) ermittelten Werte. Dagegen zeigen kommerziell erhältliche Kieselglasgranulate eine monomodale Verteilung.

**Tabelle 2: Siebfraktionierung Beispiel 1**

| Korngröße [µm] | Rückstand[%] |
|---|---|
| 100 - 125 | 0,8 |
| 125 - 160 | 2,7 |
| 160 - 200 | 42,9 |
| 200 - 315 | 13,6 |
| 315 - 355 | 15,6 |
| 355 - 400 | 24,4 |

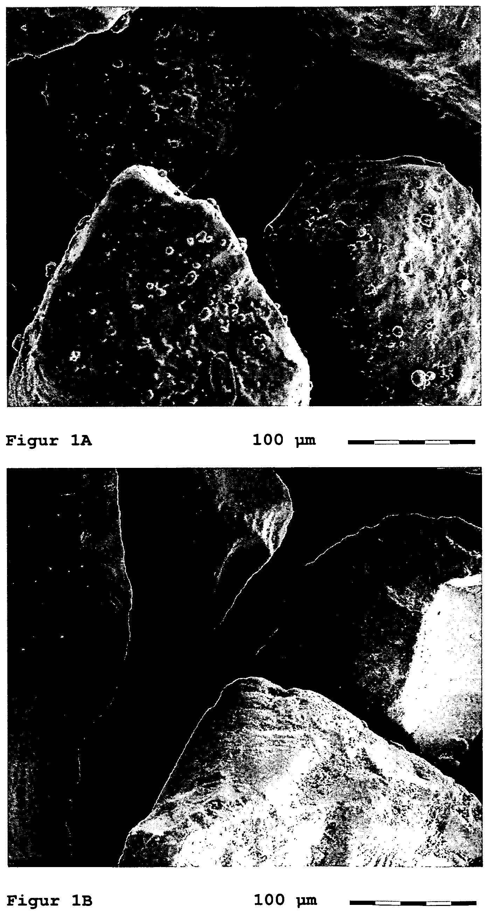

Figur 1A zeigt eine REM-Aufnahme des Kieselglasgranulates aus Beispiel 1. Man erkennt, dass die Granulatkörner weitestgehend frei von scharfen (Bruch)kanten sind. Weiterhin sind deutlich die Erhebungen auf der Oberfläche des Granulatkornes zu erkennen. Kommerziell erhältliche Kieselglasgranulate hingegen weisen scharfe (Bruch)kanten und eine glatte Oberfläche auf (Figur 1B).

Das Kieselglasgranulat weist eine hohe Reinheit und eine enge Verteilung der Granulatdimensionen auf und ist weitestgehend frei von eingeschlossenen Blasen ist.

**Tabelle 1: Einsatzstoffe, Reaktionsbedingungen und apparative Einstellungen**

| **Beispiel** | | **1** | **2** |
|---|---|---|---|
| **Eingesetztes SiO₂** | | | |
| BET-Oberfläche | m²/g | 58 | 93 |
| Stampfdichte | g/l | 68 | 48 |
| **Kompaktor¹** | | | |
| Anpresskraft | kN | 50-65 | 20-25 |
| Walzendrehzahl | min | 5 | 3 |
| Schneckendrehzahl | min | 25 | 18 |
| Schülpen/-bruchstücke | | | |
| Stampfdichte | | | |
| Schülpen² | g/l | 380 | 330 |
| Schülpenbruchstücke³ | g/l | 520 | 410 |
| Reinigung (HCl) | | | |
| Temperatur | °C | 820 | 860 |
| Dauer | min | 60 | 30 |
| **Kieselglasgranulat** | | | |
| Sintertemperatur | °C | 1320 | 1300 |
| BET-Oberfläche | m²/g | <1 | <1 |
| Dimensionen | | | |
| Fläche | nm² | 748 | 1448 |
| ECD | nm | 31 | 47 |
| Umfang | nm | 105 | 135 |
| Maximaler Durchmesser | nm | 43 | 68 |
| Minimaler Durchmesser | nm | 28 | 46 |
| Verunreinigungen | | | |
| Li | ppb | < 10 | < 10 |
| B | ppb | 28 | 25 |
| Na | ppb | 50 | < 10 |
| Mg | ppb | 37 | 11 |
| Al | ppb | 190 | 90 |
| Ca | ppb | 90 | 75 |
| Ti | ppb | 60 | 40 |
| Cr | ppb | 33 | 24 |
| Mn | ppb | < 10 | < 10 |
| Fe | ppb | 110 | 45 |
| Ni | ppb | 57 | < 10 |
| Cu | ppb | < 10 | < 10 |
| Zr | ppb | 14 | 23 |
| K | ppb | 40 | < 10 |
| Silanolgruppengehalt | ppm | 28 | 21 |

| | | | |
|---|---|---|---|
| 1)Kompaktor: L 200/50 P, Fa. Hosokawa BEPEX GmbH; Arbeitsbreite: 50 mm; mit Vorentlüftung; ausgestattet mit einer 12 mm seitlich geschlossenen Wellprofilwalze aus gehärtetem Stahl; 2) vor Klassierung; 3) nach Klassierung | | | |

## Patentansprüche

1. Verfahren zur Herstellung eines Kieselglasgranulates, welches weitestgehend frei von eingeschlossenen Blasen ist, und die folgenden Merkmale aufweist:
Fläche: 100 bis 5000 µm²,
ECD (Equivalent Circle Diameter): 5 bis 100 µm,
Umfang: 20 bis 400 µm,
Maximaler Durchmesser: 10 bis 140 µm,
Minimaler Durchmesser: 5 bis 80 µm,
wobei alle Werte Medianwerte darstellen und sich auf ein Granulatkorn beziehen,
spezifische Oberfläche BET: < 1 m²/g
Verunreinigungen: < 50 ppm,
**dadurch gekennzeichnet, dass** man
a) pyrogen hergestelltes Siliciumdioxidpulver mit einer Stampfdichte von 15 bis 190 g/l zu Schülpen kompaktiert, wobei die Kompaktierung eine mechanische Verdichtung ohne Zusatz von Bindemittel ist,
b) diese nachfolgend bricht und die Schülpenbruchstücke mit einem Durchmesser von < 100 µm und > 800 µm abtrennt,
c) wobei die Schülpenbruchstücke eine Stampfdichte von 300 bis 600 g/l aufweisen,
d) diese anschließend bei 600 bis 1100°C in einer Atmosphäre, die eine oder mehrere Verbindungen enthält, die geeignet sind Hydroxylgruppen zu entfernen, behandelt und
e) anschließend bei 1200° bis 1400°C sintert.

2. Verfahren nach Anspruch 1,
**dadurch gekennzeichnet, dass** das pyrogen hergestellte Siliciumdioxidpulver eine Stampfdichte von 30 bis 150 g/l aufweist.

3. Verfahren nach den Ansprüchen 1 oder 2,
**dadurch gekennzeichnet, dass** die Schülpen eine Stampfdichte von 400 bis 500 g/l aufweisen.

## Claims

1. Process for preparing silica glass granule which is very substantially free of enclosed bubbles and has the following features:
Area: 100 to 5000 µm²,
ECD (Equivalent Circle Diameter): 5 to 100 µm,
Circumference: 20 to 400 µm,
Maximum diameter: 10 to 140 µm,
Minimum diameter: 5 to 80 µm,
where all values are medium values and relate to a granule grain,
Specific BET surface area: < 1 m²/g
Impurities: < 50 ppm,
**characterized in that**
a) pyrogenic silicon dioxide powder with a tamped density of 15 to 190 g/l is compacted to slugs, the compacting being a mechanical compression without addition of binder,
b) these are subsequently crushed and the slug fragments with a diameter of < 100 µm and > 800 µm are removed,
c) the slug fragments having a tamped density of 300 to 600 g/l, and
d) these are subsequently treated at 600 to 1100°C in an atmosphere which comprises one or more compounds which are suitable for removing hydroxyl groups, and
e) then sintered at 1200°C to 1400°C.

2. Process according to Claim 1, **characterized in that** the pyrogenic silicon dioxide powder has a tamped density of 30 to 150 g/l.

3. Process according to Claims 1 and 2, **characterized in that** the slugs have a tamped density of 400 to 500 g/l.

## Revendications

1. Procédé pour la préparation d'un granulat de verre de silice qui est le plus largement possible exempt de bulles incluses et qui présente les caractéristiques suivantes :
surface : 100 à 5000 µm²,
ECD (diamètre circulaire équivalent) : 5 à 100 µm,
périphérie : 20 à 400 µm,
diamètre maximal : 10 à 140 µm,
diamètre minimal : 5 à 80 µm,
toutes les valeurs représentant des valeurs médianes et se rapportant à un grain du granulat,
surface spécifique BET : < 1 m²/g,
impuretés : < 50 ppm,
**caractérisé en ce que**
a) on compacte de la poudre de dioxyde de silicium préparé par voie pyrogène, présentant une densité tassée de 15 à 190 g/l, en écailles, le compactage étant un compactage mécanique sans addition de liant,
b) on brise ensuite ces écailles et on sépare les morceaux d'écaille présentant un diamètre < 100 µm et > 800 µm,
c) les morceaux d'écaille présentant une densité tassée de 300 à 600 g/l,
d) on traite ensuite ceux-ci à 600 jusqu'à 1100°C dans une atmosphère qui contient un ou plusieurs composés qui conviennent pour éliminer les groupes hydroxyle et
e) on fritte ensuite à 1200°C jusqu'à 1400°C.

2. Procédé selon la revendication 1, **caractérisé en ce que** la poudre de dioxyde de silicium préparée par voie pyrogène présente une densité tassée de 30 à 150 g/l.

3. Procédé selon les revendications 1 ou 2, **caractérisé en ce que** les écailles présentent une densité tassée de 400 à 500 g/l.
